# EUROPÄISCHE PATENTANMELDUNG

(11) **EP 1 126 690 A2**
(43) Veröffentlichungstag der Anmeldung: **22.08.2001**
(21) Anmeldenummer: 00128251.6
(22) Anmeldetag: 21.12.2000
(51) Int. Cl.: H04M 15/00

(54) **Verfahren und Vorrichtung zur Ermittlung des Abrechnungspreises bei Telekommunikationsdienstleistungen**

(30) Priorität: 23.12.1999 DE 19962713
(71) Anmelder: MSI Telesolutions Aktiengesellschaft, 81379 München (DE)
(72) Erfinder: Lindner, Andreas, 81479 München (DE); Breier, Helmut, 82008 München (DE); Trischberger, Andreas, 81379 München (DE)
(74) Vertreter: Alber, Norbert, Dipl.-Ing.

(57) **Zusammenfassung**

Zur Senkung von Telefonkosten, aber auch zur Überprüfung der Abrechnung von Telekommunikationsdienstleistungen gegenüber einem Kunden, wird eine Vorrichtung sowie ein Verfahren zur simulativen Berechnung des Abrechnungspreises von Telekommunikations-Dienstleistungen zur Verfügung gestellt, bei der die tarifrelevanten Daten mit den verbrauchsrelevanten Parametern des Kunden korreliert werden. Zur Optimierung der Telekommunikationskosten eines Kunden werden dessen verbrauchsrelevante Daten mit allen tarifrelevanten Daten aller Anbieter durchgerechnet und die Ergebnisse miteinander verglichen, und so der günstigste Anbieter bzw. ein definierter Mischbezug der Dienstleistungen von verschiedenen Anbietern ermittelt, der den geringsten Gesamtpreis für die Telekommunikationsdienstleistungen ergibt.

## Beschreibung

### I. Anwendungsgebiet

Die Erfindung betrifft ein Verfahren sowie eine Vorrichtung zur simulativen Berechnung des Abrechnungspreises von Telekommunikations-Dienstleistungen.

Im folgenden werden die Abkürzungen TK für "Telekommunikation(s)" und TK-D für "Telekommunikations-Dienstleistungen" benutzt.

### II. Technischer Hintergrund

Durch die relativ große Anzahl von Anbietern von Telekommunikations-Dienstleistungen, die auch nebeneinander genutzt werden können, und zusätzlich durch die Tatsache, daß die sogenannte "letzte Meile", also das Ende der Kommunikations-Verbindung zum Kunden hin nach wie vor von dem bisherigen Telekommunikations-Monopolisten beherrscht wird, ergeben sich für die Kundenneben den erzielbaren Preisvorteilen - auch Nachteile:

Ein erster Problemkreis besteht darin, von welchem Anbieter zukünftig Telekommunikations-Dienstleistungen (TK-D) in Anspruch genommen werden sollen, da dies gerade bei Kunden mit größerem Nutzungsumfang meist nicht eine Entscheidung prinzipiell für einen Anbieter ist, sondern eine selektive Entscheidung, indem abhängig von Zielort, Uhrzeit, Wochentag etc. unterschiedliche Anbieter genutzt werden. Eine solche Entscheidung über einen Anbietermix kann zwar aufgrund einer mehr oder weniger genauen Analyse des TK-Verhaltens des Kunden durchgeführt werden, eine optimale Festlegung des Anbieter-Mixes kann jedoch naturgemäß nur mit Hilfe von Original-Telekommunikations-Daten des Kunden, aufgezeichnet über einen größeren Zeitraum, erfolgen, indem für diesen Originaldatensatz der nachweislich beste Anbietermix errechnet wird. Unter Anbietermix ist dabei immer nicht nur die Wahl der einzelnen Anbieter, sondern auch bestimmter, von diesen Anbietern angebotener, Tarifmodelle zu verstehen.

Da es sich bei großen TK-Kunden bei solchen Originaldaten um sehr große Datenmengen handeln kann, die zum Zwecke der Optimierung mit allen oder einer Vorauswahl von tarifrelevanten Parametern korreliert werden müssen, sind hierbei große Rechenzeiten notwendig.

Ein anderer Problemkreis besteht darin, daß nach dem Wechsel zu einem oder mehreren neuen Anbietern deren Abrechnungen auf ihre Richtigkeit hin zum einen hinsichtlich des vorab berechneten Einsparpotentials und zum anderen hinsichtlich der absoluten Richtigkeit überprüft werden sollen.

Die bisherigen TK-Monopolisten übermitteln in analogen Festnetzen einen analogen Gebührenimpuls bzw. in digitalen Festnetzen eine digitale Tarifinformation zum Kunden und dessen TK-Anlage. Dieser Impuls bzw. diese Tarifinformation deckt sich zwar nicht mit der tatsächlichen Abrechnungshöhe für die in Anspruch genommene TK-Dienstleistung, konnte jedoch vom Kunden als Anhaltspunkt die Gebührenermittlung vor Ort, beim Kunden, etwa durch Anzeige an dessen TK-Gerät, benutzt werden. Dies ist jedoch auch bei einem TK-Monopolisten als Anbieter nur möglich, wenn der Kunde dabei einen der linearen, mit der Gebühreninformation also zeitlich gekoppelten, Tarif benutzt. Bei Nutzung anderer Tarifmodelle ist die Nutzung des Gebührenimpulses bzw. der Gebühreninformation sinnlos.

Wenn der Kunde einen anderen Anbieter als den jeweiligen TK-Monopolisten nutzt, ist ein derartiger Gebührenimpuls bzw. eine Tarifinformation ohnehin meist nicht vorhanden.

Sowohl die Vorab-Errechnung des Abrechnungspreises für die TK-Dienstleistungen eines Abrechnungszeitraumes mittels der verbrauchsrelevanten Daten eines bereits zurückliegenden Abrechnungszeitraumes, in der Regel wegen der Absicht des Wechselns zu einem oder mehreren neuen Anbietern, als auch die Ermittlung des Abrechnungspreises für eine aktuelle Abrechnungsperiode von TK-Dienstleistungen kann somit nicht mit Hilfe der vom Monopolisten übermittelten Gebührenimpulse, sondern nur mittels Simulation erfolgen.

### III. Darstellung der Erfindung

### a) Technische Aufgabe

Es ist daher die Aufgabe gemäß der Erfindung, eine Vorrichtung sowie ein Verfahren zur simulativen Berechnung des Abrechnungspreises von Telekommunikations-Dienstleistungen zu schaffen, dessen Ergebnis dem tatsächlichen Abrechnungspreis nach Möglichkeit identisch ist und bei dem der zu treibende Aufwand für Erstellung und Pflege möglichst gering ist.

### b) Lösung der Aufgabe

Diese Aufgabe wird durch die Merkmale der Ansprüche 1 und 24 gelöst. Vorteilhafte Ausführungsformen ergeben sich aus den Unteransprüchen.

Eine derartige Simulations-Vorrichtung umfaßt aufgrund der großen zu bewältigenden Datenmengen einen Rechner, in der Regel einen Computer, sowie eine zugehörige Ein- und Ausgabeeinheit, sowie eine Verbindungsvorrichtung des Rechners zur TK-Anlage des Kunden. Mit dem Rechner steht eine erste Speichereinheit in Verbindung, in der alle zur Verfügung stehenden bzw. alle vom Kunden genutzten Anbieter bzw. die hiervon genutzten Tarife abgelegt sind und auch jeweils aktualisiert werden.

In einer weiteren, zweiten Speichereinheit werden die verbrauchsrelevanten Daten, also Angaben zu den tatsächlich vom Kunden durchgeführten Telefonaten bzw. Datentransfers zwischengespeichert bis zur Korrelierung mit den tarifrelevanten Parametern.

Ein Teil der verbrauchsrelevanten Daten, nämlich Datum, Zeitpunkt und Zeitdauer und Zielrufnummer des jeweiligen Telefongespräches bzw. der Datenübermittlung werden dabei von der TK-Anlage bzw. einer der TK-Anlage zugeordneten oder in dieser integrierten Meßeinheit ermittelt. Die Zuordnung dieser Meßeinheit zur TK-Anlage ist notwendig, da nur in der TK-Anlage für jedes Gespräch auch die entsprechende Ziel-Telefonnummer bzw. wenigstens die Ziel-Ortsnetzkennzahl, bei Auslandsgesprächen natürlich einschließlich der entsprechenden Landesvorwahl, verfügbar ist.

Aus dem Datum wird mittels des Rechners bzw. des im Rechner abgelegten Programmes der Wochentag bzw. die Unterscheidung Werktag/Wochenende/ Feiertag getroffen. Auch die Zuordnung des Kunden und seiner TK-Anlage zu dem heimischen Ortsnetz (Quell-Ortsnetz) ist im Rechner abgelegt.

Zumindest der durch die TK-Anlage bzw. die Meßeinheit ermittelte Teil der verbrauchsrelevanten Daten, insbesondere alle verbrauchsrelevanten Daten, werden der zweiten Speichereinheit zugeführt. In der Regel geschieht dies nicht nur bei ausgehenden, sondern auch bei eingehenden Gesprächen bzw. Datenübermittlungen.

Dieser zweite Speicher ist entweder an der TK-Anlage angeordnet, und umfaßt auch einen dort angeschlossenen Controller. Dies ist notwendig, da viele TK-Anlagen zwar über einen eigenen kleinen Speicher verfügen, dieser jedoch eine zu geringe Kapazität hat.

Der zweite Speicher kann auch im Rechner untergebracht sein bzw. diesem zugeordnet sein, jedoch hat dies den Nachteil, daß dann die Verbindung von der TK-Anlage zum Rechner ständig bestehen muß, also bei Integration der zweiten Speichereinheit im Rechner auch der Rechner ständig in Betrieb sein muß, um die von der TK-Anlage bzw. der Meßeinheit bei jedem Gespräch zeitgleich erzeugten Daten aufzeichnen zu können.

Bei den in Anspruch genommenen TK-Dienstleistungen handelt es sich in aller Regel nur um aktiv geführte Telefongespräche bzw. Datenübermittlungen, jedoch sind auch Tarifmodelle denkbar, bei denen der Kunde auch für ankommende Telefongespräche bezahlen muß, beispielweise den sogenannten R-Gesprächen, wie sie in USA seit Jahrzehnten üblich sind.

Der Rechner beinhaltet des weiteren ein Programm zur Verknüpfung der tarifrelevanten Daten mit den verbrauchsrelevanten Daten. Bei der Nachprüfung der von dem einzelnen Anbieter übersandten tatsächlichen Abrechnung an den Kunden bedeutet dies, daß jedes einzelne Telefongespräch bzw. Datenübermittlung mit dem zutreffenden Tarif des entsprechenden Anbieters zu einem Roh-Abrechnungspreis hochgerechnet werden muß. Am Ende einer Abrechnungsperiode müssen dann zusätzlich die von dem jeweiligen Anbieter angebotenen Rabattierungen in Ansatz gebracht werden.

Bei der Optimierung des Anbietermixes für TK-Dienstleistungen bei einem Kunden müssen theoretisch alle Telefongespräche einer zurückliegenden, aufgezeichneten Abrechnungsperiode mit jeweils allen zur Verfügung stehenden Anbietern bzw. deren Tarifen zunächst zu einem Roh-Abrechnungspreis errechnet werden, und zusätzlich am Ende der Abrechnungsperiode noch die zutreffenden Rabattierungen in Ansatz gebracht werden, und darüber hinaus sämtliche möglichen Kombinationen aller möglichen Anbieter und deren Tarifmodelle pro stattgefundenem Telefongespräch hinsichtlich des Abrechnungspreises der Gesamtperiode durchgespielt werden, um den günstigsten Anbietermix zu ermitteln.

In der Praxis bereitet dies jedoch Schwierigkeiten, je nach Art der Rabattierung:

Eine Schwierigkeit besteht darin, daß sich Telefonate oder Datenübertragungen über Zeitgrenzen hinweg erstrecken, die bei einem bestimmten Rabatt vorhanden sind. Diese Schwierigkeit wird umgangen, indem das Programm das Überschreiten der Zeitgrenze erkennt, und dieses Gespräch aufteilt in zwei fiktive Einzelgespräche, die zeitlich unmittelbar aneinander anschließen, und zwar genau an der relevanten Zeitgrenze. Es werden also für dieses Gesprächs zwei verbrauchsrelevante Datensätze entsprechend zwei fiktiven Gespräche erstellt.

Ein anderes Problem stellen die Rabatte für Lang-Telefonieren, also Telefonate, die pro Gespräch eine bestimmte Gesprächsdauer überschreiten, dar, und bei denen die Rabattierung erst ab Überschreiten der Zeitgrenze für die restliche Gesprächszeit einsetzt:

Aus der Gesamtgesprächsdauer solcher Lang-Telefonate, die in der Vergangenheit stattfanden, wird für jedes einzelne Telefonat anhand der für diese Verbindung gültigen Taktzeit (die von ein bis n Sekunden reichen kann) beim Übergang von Zeitgrenzen die Anzahl der Takte ermittelt, und unter Berücksichtigung von Tarifwechseln.

In den tarifrelevanten Daten ist die Zeit (Zeitgrenze) angegeben, ab der der Langtelefonierer-Rabatt gilt. Nun werden anhand dieser Zeit und der für die aktuelle Verbindung gültigen Taktzeit (ermittelt über den zugeordneten Tarif, die Beginnzeit und die Dauer) die Anzahl der Takte ermittelt, die komplett in die Dauer bis zum Einsetzen des Langtelefonierer-Rabatts passen. Diese Takte werden ohne Rabatt tarifiert, alle weiteren mit Rabatt.

Bei Rabattierungen, die erst ab einer bestimmten Umsatzhöhe pro Periode eingesetzt, kann ein Anbieter für den Kunden zum günstigsten Anbieter werden, der ohne Berücksichtigung der Rabattierung nicht der günstigste war.

Dieser Schwierigkeit wird durch die Art des verwendeten Berechnungsalgorhythmus Rechnung getragen.

Weiterhin wird vorzugsweise durch ein Vorauswahlverfahren - beispielsweise Grobbestimmung des TK-Verhaltens des Kunden - eine Vorauswahl unter den in Frage kommenden Anbietern bzw. deren Tarifen festgelegt, und ausschließlich für diese eingeschränkte Auswahl die vorher erläuterten Kombinationen durchgerechnet.

Für die Vorauswahl werden zwei Verfahren einzeln oder gemeinsam angewandt:

Die Verknüpfung der verbrauchsrelevanten Daten mit den tarifrelevanten Daten wird zunächst nur mit Auswahl-Daten aus den verbrauchsrelevanten Daten durchgeführt. Die Auswahldaten haben einen extrem geringeren Umfang als die tatsächlich zur Verfügung stehenden verbrauchsrelevanten Daten, ähneln den verbrauchsrelevanten Daten jedoch in ihrer strukturellen Zusammensetzung, also beispielsweise Häufigkeitsverteilung, Zielpunktverteilung, Zeitdauer und Zeitpunkten der Gespräche etc. Durch Verknüpfung dieser verbrauchsrelevanten Auswahl-Daten mit den gesamten tarifrelevanten Daten ergibt sich bereits mit hoher Wahrscheinlichkeit, welche Tarife bzw. Anbieter für den jeweiligen Kunden außer Betracht bleiben können. Dies sind in der Regel mehr als 50%, meist sogar ca. 70%, der vorhandenen Anbieter bzw. Tarife.

Das andere Vorauswahlverfahren besteht in der Berücksichtigung der Qualitätsparameter, die in unscharfer oder auch scharfer Datenform vorliegen können. Diejenigen Anbieter bzw. deren Tarife, die keine ausreichende Qualität unter gewissen Gesichtspunkten wie etwa Verfügbarkeit, Beständigkeit der Verbindung, Service etc. aufweisen, werden für die weitere Berechnung nicht mehr herangezogen. Beispielsweise kann vom Kunden vorgegeben werden, mit bestimmten Anbietern nicht zusammenarbeiten zu wollen.

Der Verringerung des Rechenaufwandes dient in diesem Zusammenhang auch eine spezifische Organisation der Speichereinheit für die tarifrelevanten Daten: Diese Speichereinheit ist nicht in Form eines einzigen Speichers, also einer einzigen Datenbank, organisiert, was die einfachste Art der Übernahme der tarifrelevanten Daten, wie sie von den einzelnen Anbietern zur Verfügung gestellt wird, bedeuten würde. Stattdessen ist diese erste Speichereinheit in Teil-Speichereinheiten, sogenannten Tabellen, unterteilt, die zueinander in Verbindung gebracht werden können, und einerseits die Anbieter samt deren Verzonungsdaten, andererseits die unterschiedlichen Tarifmodelle und des weiteren Angaben zu den Rabatten umfassen. Jeder dieser drei Bereiche besteht dabei wiederum aus jeweils mehr als einer Tabelle, was den späteren Rechenaufwand und die Pflege der tarifrelevanten Daten minimieren hilft.

Des weiteren kann die Simulationsvorrichtung einen Vergleicher umfassen, der den tatsächlichen, dem Kunden in Rechnung gestellten, Abrechnungspreis und ggf. die diesem Abrechnungspreis vom Anbieter zugrundegelegten Daten - nach Eingabe über eine geeignete Eingabeinheit in den Rechner der Simulationsvorrichtung - direkt mit dem tatsächlichen Abrechnungspreis vergleicht. Dies bietet die Möglichkeit, nicht nur die Endpreise zu vergleichen, sondern bei Differenzen auch festzustellen, in welchem Abrechnungsteil (Tarif/Zielort) die Differenz liegt. Dies erleichtert das Auffinden der Ursache für derartige Abweichungen ganz erheblich.

Ferner kann der Rechner und ebenso die Telekommunikationsanlage und/oder die diese beiden Komponenten verbindende Verbindungsvorrichtung Teil eines Datennetzes sein, sei es eines firmeninternen Datennetzes beim Kunden also auch eines bezüglich des Kunden externen Datennetzes. Dadurch ist die räumliche Zuordnung der einzelnen Komponenten zum Kunden, dem Anbieter bzw. einer Controlling-Firma, welche die Abrechnungspraxis des Anbieters überprüft, nicht mehr festgelegt. Da in der Regel sowohl der Anbieter als auch der Kunde als auch die Controlling-Firma jeweils über eigene Rechner und zugehörige Speichereinheiten und Ein/Ausgabe-Einheiten verfügen, kann die Speichereinheit für die tarifrelevanten Daten ebenso wie die Speichereinheit für die verbrauchsrelevanten Daten wahlweise beim Kunden oder bei der Controlling-Firma abgelegt sein.

Ferner ist es damit für den Kunden jederzeit möglich, über seine eigene Ein/Ausgabeeinheit den momentanen Stand des Abrechnungspreises in der jeweiligen Abrechnungsperiode - bei noch laufender Abrechnungsperiode jedoch nur den Roh-Abrechnungspreis unter extrapolierender Berücksichtigung von Rabattierungen - abzufragen. Bei der Vorgehensweise der simulativen Berechnung des Abrechnungspreises ist hervorzuheben, daß auf der Seite des Kunden nicht nur der reine Verbrauch, also die Zeitdauer der Inanspruchnahme der TK-Dienstleistung, ermittelt wird sowie der Zeitpunkt der Inanspruchnahme, sondern darüber hinaus - neben dem Quell-Ortsnetz - auch das Ziel-Ortsnetz bzw. die Ziel-Rufnummer, der benutzte Anbieter, da nur durch diese Angaben eine exakte Simulation zunächst des Roh-Abrechnungspreises für das einzelne Telefongespräch und am Ende der Abrechnungsperiode auch des End-Abrechnungspreises nach Abzug von Rabattierungen möglich ist.

Weiterhin sollen erfindungsgemäß auch die Simulation der Abrechnung von Internet-Protokoll(IP)-Diensten möglich sein, also beispielsweise betreffend
- eMails (SMTP-Protokoll),
- IP-Telefonie,
- Web-Surfen (HTTP-Protokoll),
- Datenübertragung via Internet (FTP-Protokoll).

Zu diesem Zweck muß die TK-Anlage mit einem PC-Netz über ein Bindeglied verknüpft sein. Dieses Bindeglied kann zur Ermittlung der verbrauchsrelevanten Daten, entsprechend der Meßeinheit bei den vorbeschriebenen Lösungen, benutzt werden, gibt jedoch nur einen Zähler dahingehend ab, wieviele Datenpakete über das Bindeglied gelaufen sind. Zukünftig soll dieses Bindeglied auch Angaben darüber auswerfen, welches IP-Protokoll, also welcher IP-Dienst, benutzt wurde, von welcher spezifischen Nutzeradresse beim Kunden der Dienst benutzt wurde, und zusätzlich wer Absender bzw. Empfänger des Paketes war.

Aus den vorgenannten Angaben lassen sich dann - wiederum mittels eines EDV-Programmes, welches im Rechner abgelegt ist - die anhand der vorbeschriebenen reinen TK-Lösungen erwähnten verbrauchsrelevanten Daten ermitteln.

### c) Ausführungsbeispiele

Eine Ausführungsform gemäß der Erfindung ist im folgenden anhand der Figuren beispielhaft näher beschrieben. Es zeigen:
Fig. 1: eine Prinzipdarstellung der erfindungsgemäßen Vorrichtung,
Figuren 2: die Teilspeicher der ersten Speichereinheit 4, und
Fig. 3: Darstellung eines Stufentarifes.

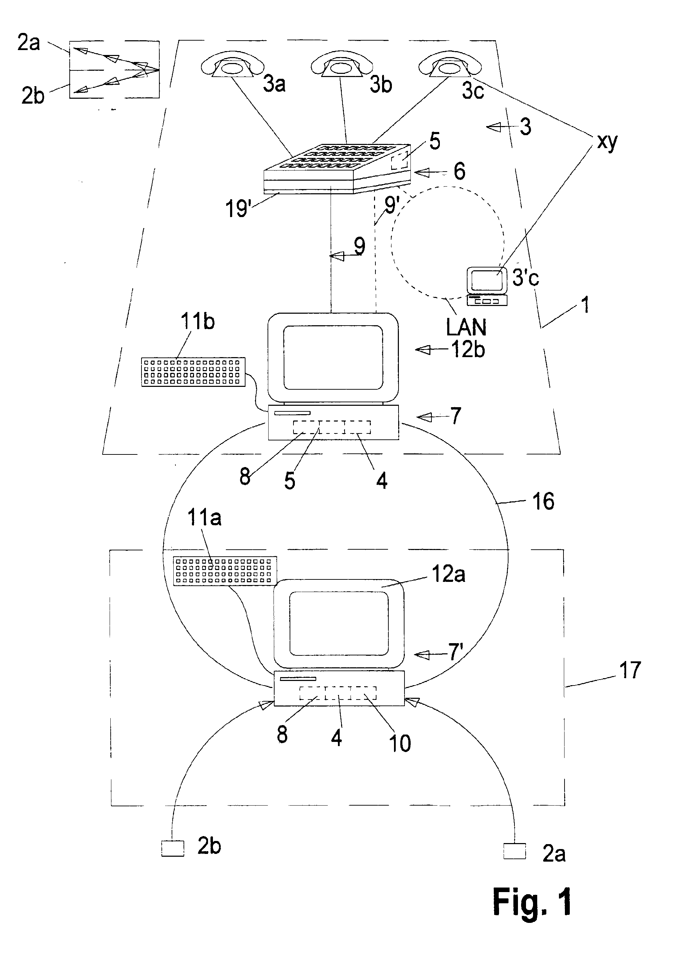

Fig. 1 zeigt zunächst die Telekommunikations-Anlage 3, die eine Vielzahl von Telefonapparaten oder anderen Endgeräten 3a,b,c.. umfassen kann.

An der TK-Anlage 3 ist eine Messeinheit 6 funktional und in der Regel auch örtlich zugeordnet, die an der TK-Anlage 3 alle verbrauchsrelevanten Daten der mittels dieser TK-Anlage 3 geführten, zumindest aktiv geführten, Telefonate und Datenübertragungen aufzeichnet.

Diese verbrauchsrelevanten Daten werden in einer zweiten Speichereinheit 5, die sich vorzugsweise an bzw. in der Telekommunikations-Anlage 3 und/oder der zugeordneten Messeinheit 6 befindet, zwischengespeichert, bis sie für eine Simulationsberechnung benötigt werden.

Die Messeinheit 6 ist über eine Verbindungsvorrichtung 9 mit einem Rechner 7 verbunden, der in der Regel auch über eine Eingabeeinheit 11b, beispielsweise in Form einer Tastatur, und eine Ausgabeeinheit 12b, beispielsweise einen Bildschirm, verfügt, und ebenfalls beim Kunden 1 steht.

Sofern dieser Rechner 7 einerseits mit der ersten Speichereinheit 4 ausgestattet bzw. gekoppelt ist, in welcher die tarifrelevanten Parameter abgelegt sind, und andererseits mit einem Programm 8, welches verbrauchsrelevanten Daten und tarifrelevante Daten zwecks Simulationsberechnung verknüpfen kann, ist allein mit Hilfe dieses Rechners 7 bereits die Durchführung der simulativen Berechnung möglich.

Dabei ist auch zu erkennen, daß die zweite Speichereinheit 5, in der die verbrauchsrelevanten Daten zwischengespeichert werden, statt in oder an der TK-Anlage 3 oder der Messeinheit 6 - dann mit zusätzlichem Controller - durchaus auch an oder in dem Rechner 7 angeordnet sein kann, sofern die Verbindungsvorrichtung 9 dazwischen eine permanent offene Datenverbindung ist.

Fig. 1 zeigt ferner, daß der Rechner 7 Bestandteil eines Datennetzes 16 sein kann, in dem sich ein oder mehrere weitere Rechner 7', vorzugsweise wiederum mit Ein- und Ausgabeeinheit 11a und 12a, befinden. Ein solcher Rechner 7' wird dabei vorzugsweise bei der Controlling-Firma 17 stehen, sofern diese Controlling-Firma für die Durchführung der Simulationsberechnung verantwortlich ist. In diesem Fall werden dann auch die erste Speichereinheit 4 mit den tarifrelevanten Daten sowie das Programm 8 in dem bei der Controlling-Firma 17 stehenden Rechner 7' integriert bzw. zugeordnet sein, und nicht in dem beim Kunden stehenden Rechner 7.

Für die zweite Speichereinheit 5 für die verbrauchsrelevanten Daten steht wiederum die Wahlmöglichkeit frei, diese entweder in der Telekommuikations-Anlage 3, in dere Messeinheit 6, im Rechner 7 des Kunden 1 oder im Rechner 7' der Controlling-Firma 17 anzuordnen bzw. zuzuordnen.

Mit dieser Grundkonstellation ist es möglich, die von den einzelnen Endgeräten 3a,b,c.. aus über unterschiedliche Anbieter 2a, 2b.. durchgeführten TK-Dienstleistungen hinsichtlich ihrer verbrauchsrelevanten Daten aufzuzeichnen und zu einem beliebigen Zeitpunkt, meist dem Ende einer Abrechnungsperiode, mittels des Programmes 8 in Beziehung zu den tarifrelevanten Daten zu setzen und die Simulationsrechnung durchzuführen.

Fig. 1 zeigt ferner die Eingabemöglichkeit am Rechner 7' der Controlling-Firma für die tatsächlichen Rechnungsstellungsdaten, wie sie z. B. von den Anbietern 2a, 2b an den Kunden 1 verschickt werden, und den Vergleicher 10 innerhalb des Rechners 7', um diese Daten mit den Simulationsberechnungsdaten zu vergleichen.

Mit gestrichelten Linien ist in Fig. 1 ferner die Konstellation eingezeichnet, wenn die TK-Anlage 3 zwecks Nutzung der IP-Dienste mit einem Rechnemetz, dem LAN, verbunden ist, wofür ein entsprechendes Bindeglied 19 als Kopplungseinheit notwendig ist.

Der Rechner 7 zur Simulation der Verbrauchsabrechnungen muß dann über seine Verbindung mit diesem Bindeglied 19, z.B. eine weitere Verbindungsleitung 9' oder eine Netzwerkkarte verbunden sein, um aus diesem Bindeglied die beschriebenen Angaben zur Bestimmung der IP-verbrauchsrelevanten Daten zu erhalten und aufzubereiten.

Dabei steht in der Regel jeder Rechner 3'c des LAN-Netzwerks zusammen mit einer bestimmten Nebenstelle 3c der TK-Anlage 3 zusammen ein und demselben Nutzer XY aus dem Hause des Kunden zur Verfügung. Die entsprechenden Korrelationen müssen bekannt und im Rechner 7 verfügbar sein.

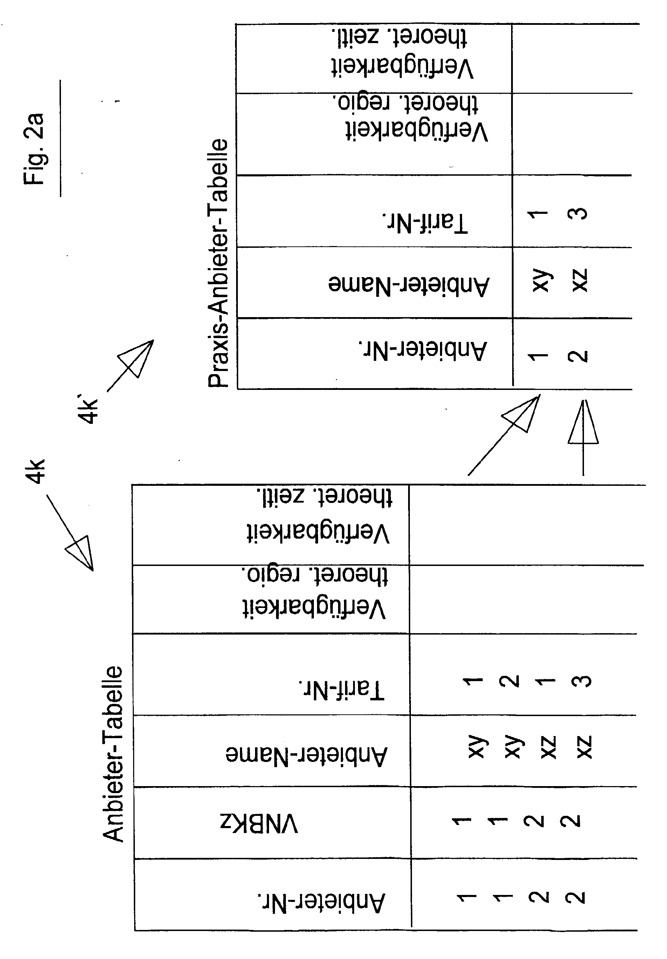

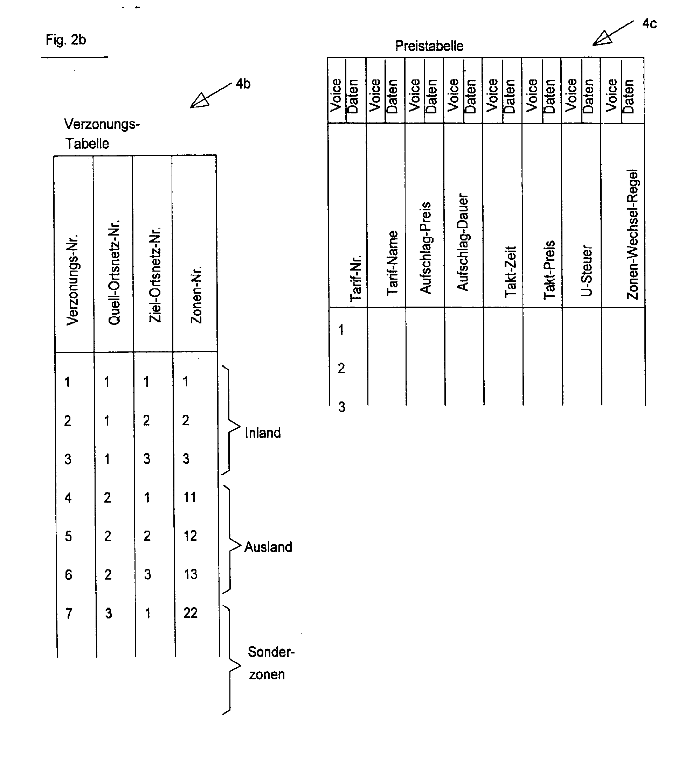

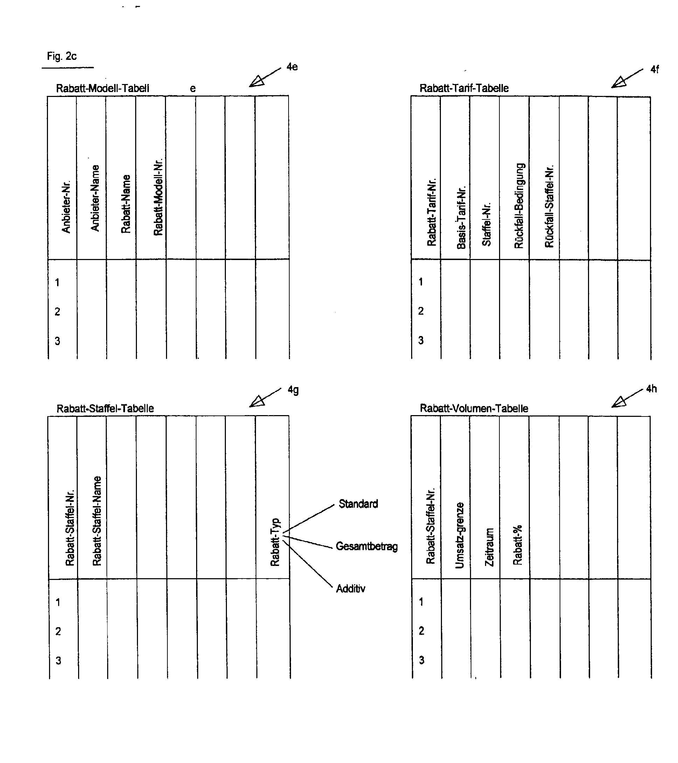

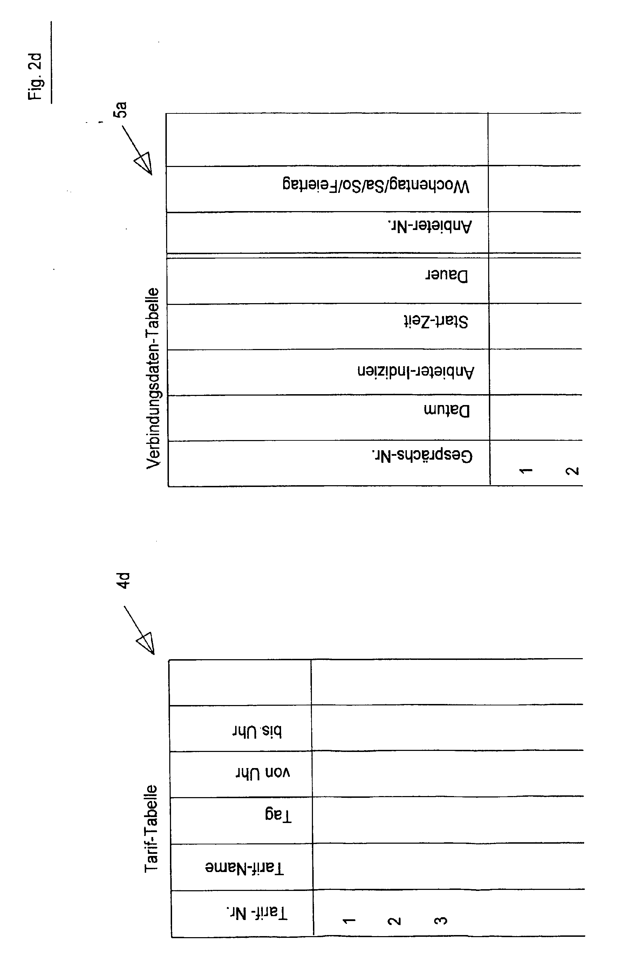

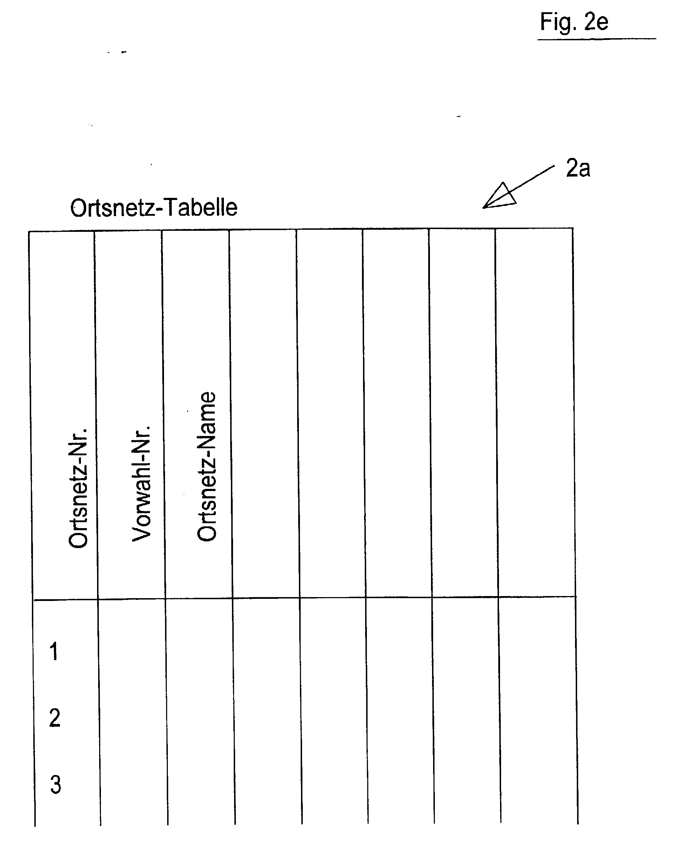

Figuren 2 zeigen Teil-Speichereinheiten, die primär die anbieterbezogenen Daten enthalten, und vorzugsweise in Form von Tabellen erstellt sind.

In der sogenannten Ortsnetz-Tabelle (Fig. 2e) werden die von der jeweiligen nationalen Telekommunikations-Behörde festgelegten Ortsnetze einschließlich deren Vorwahlnummer und offiziellem Namen, für das Inland und gegebenenfalls auch für das Ausland und für Dienste und Sondernummern jeweils einer bestimmten Ortsnetz-Nummer als Ordnungsnummer zugeordnet.

In der Anbieter-Tabelle 4k (Fig. 2a) werden alle bekannten Anbieter mit ihrem Namen, den jeweils von dem Anbieter angebotenen Tarif (gekennzeichnet durch eine Tarif-Nummer) und zusätzlich einer weiteren Identifikationsziffer VNBkz als dritte Konkordanz sowie der (theoretischen) regionalen und zeitlichen Verfügbarkeit wiederum einer bestimmten Anbieter-Nummer als Ordnungsnummer zugeordnet. Die theoretische zeitliche Verfügbarkeit wird nur in wenigen Stufen angegeben, z. B. "verfügbar/nicht verfügbar/geplant/im Aufbau/verfügbar ab (Datum)".

Sofern eine Praxis-Verfügbarkeit in dieser Tabelle überhaupt geführt ist, was in der Regel nicht der Fall ist, ist diese in Hard-Facts und Soft-Facts, also exakt definierbare und nicht exakt definierbare, Angaben unterteilt. Zu den Hard-Facts zählen dabei die vom Anbieter den Kunden allgemein oder diesem speziellen Kunden zugesicherte Qualitätskriterien seines Services, zu den Soft-Facts dagegen die von der Controllingfirma selbst mit diesem Anbieter gesammelten Praxiserfahrungen.

Die Praxis-Anbieter-Tabelle stellt einen Auszug aus der vorgenannten Anbieter-Tabelle dar, indem in der Praxis-Anbieter-Tabelle nur diejenigen Anbieter bzw. deren Tarife sowie die anderen in der vorgenannten Anbieter-Tabelle enthaltenen Angaben aufgeführt sind, für die auch in der Praxis eine Verfügbarkeit gegeben ist. Dies ist notwendig, da häufig Anbieter sich Lizenzen geben lassen, die noch nicht am Markt sind und damit praktisch nicht verfügbar sind, und teilweise auch niemals praktische Verfügbarkeit erreichen.

Fig. 2b zeigt die das Tarifsystem betreffende Teil-Speichereinheit, wiederum unterteilt in einzelne sogenannte Tabellen:

Die Verzonungs-Tabelle 4b stellt für jede mögliche Kombination von Quell-Ortsnetz-Nummer zu jeder möglichen Ziel-Ortsnetz-Nummer die hierbei geltende Zone klar, und ordnet dies einer Verzonungs-Nummer als Ordnungs-Nummer zu. Dies erfolgt in der Regel für das Inland, das Ausland und Sonderkonstellationen wie etwa grenzüberschreitenden Telefonaten bei grenznahen Quell- und Ziel-Ortsnetz-Nummern. Die Verzonungs-Nummer als Identifikationsmerkmal kann auch in einer eigenen Datei mit zusätzlichen Namen verknüpft und abgelegt sein.

In der Preistabelle (4c) ist jeder einzelne Tarif - kenntlich durch die entsprechende Tarifnummer als Ordnungszahl - definiert hinsichtlich seines Verlaufes durch den jeweiligen Aufschlagpreis, die Aufschlagdauer, die Taktzeit, den Taktpreis, gegebenenfalls die darauf anfallende Umsatzsteuer und die geltende Zeit-Zonen-Wechselregel. Sofern sich die Parameter dabei für z.B. Telefonate und Datenübertragung unterscheiden, sind diese in der Preistabelle 4c als jeweils separate Tarife ausgewiesen.

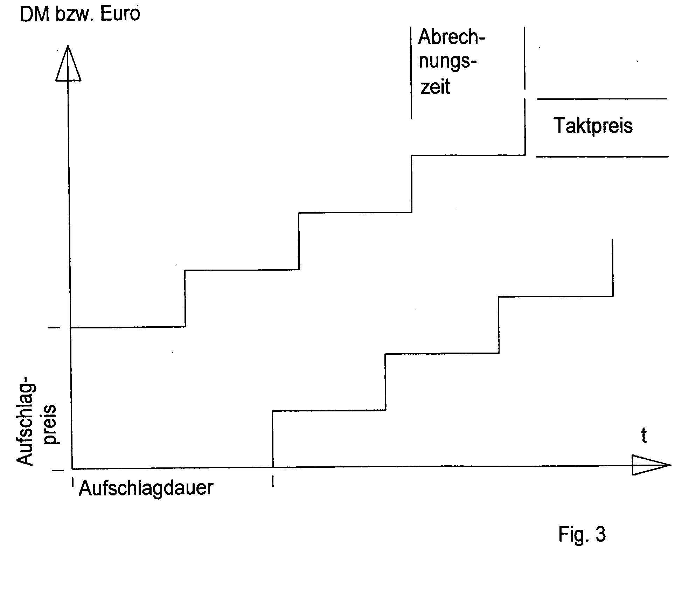

In Fig. 3 ist ein solcher Tarif beispielhaft in einem Preis-Zeit-Diagramm dargestellt.

Dabei ist eben in der Regel kein linearer Zusammenhang zwischen Preis und Zeit gegeben, sondern ein stufenweiser Zusammenhang. Der Beginn der Stufenlinie kann im Nullpunkt liegen, kann jedoch auch auf Abszisse oder Ordinate liegen. Der Startpunkt auf der Zeitkoordinate wird als Aufschlagdauer bezeichnet, ein eventueller Startpunkt auf der Preis-Abszisse als Aufschlagpreis. Die danach folgenden Stufen sind in der Regel hinsichtlich Stufenhöhe (Taktpreis) und Stufenlänge (Taktzeit) gleichbleibend.

Fig. 2d zeigt weiterhin die Tariftabelle 4d, in welcher der Tarifnummer als Ordnungszahl und dem zugehörigen Tarifnamen die zeitliche Gültigkeit, also hinsichtlich Wochentag/Sonn- und Feiertage und der entsprechenden Uhrzeit-Grenzen, abgelegt sind.

Wie Tariftabelle 4d und die Anbietertabelle 4k zeigen, sind im vorliegenden Fall die verschiedenen Anbieter den unterschiedlichen Tarifmodellen zugeordnet. Möglich wäre es auch andersherum, also die verschiedenen vorhandenen Tarifmodelle den einzelnen Anbietern zuzuordnen, was entsprechende Änderungen in der Tariftabelle 4d und der Anbietertabelle 4k zur Folge hätte.

Fig. 2c zeigt die Teil-Speichereinheit mit der ersten Speichereinheit 4 betreffend die Rabatt-relevanten Informationen. Diese sind wiederum in Form einzelner Tabellen abgelegt.

So zeigt die Rabatt-Modell-Tabelle 4e, welcher - durch Anbieternummer und Anbietername definierter - Anbieter welche durch Rabatt-Name und Rabatt-Modell-Nummer (Rabatt-Tarif-Nummer) (also Ordnungszahl) gekennzeichnete Rabatt-Modelle anbietet.

Der Anbietername wird in der Regel an dieser Stelle nicht mehr mitgeführt, da die Korrelation mit der eindeutig definierenden Anbieternummer nur einmal notwendig ist, und im vorstehenden Fall bereits in der Anbietertabelle vorhanden ist.

In der Rabatt-Tarif-Tabelle 4f wird jeder der vorgenannten Rabatt-Tarif-Nummern zugeordnet, welchen Basistarif (nach Nummer und Name) dieser Rabatt-Tarif betrifft, welche Staffel-Nummer dabei benutzt wird, und gegebenenfalls welche Rückfallbedingung (welcher Tarif ohne die Rabattierung gelten würde) zu berücksichtigen ist, identifiziert durch eine Rückfall-Staffel-Nummer.

Die Rabatt-Staffel-Tabelle 4g wiederum ordnet jeder der Rabatt-Modell-Nummern als Ordnungszahl neben dem jeweiligen ausgeschriebenen Namen auch den Typ dieses Rabattes zu, also beispielsweise ein Gesamtbetrags-Rabatt, der sich auf alle bei dem jeweiligen Anbieter oder im jeweiligen Tarif des Anbieters erzielten Umsätze in einer Abrechnungsperiode ergibt, oder ein additiver Rabatt, der innerhalb der jeweiligen Umsatzgrenzen stufenweise unterschiedliche Rabattstufen einräumt etc.

Zusätzlich ist die Rabattmodellnummer angegeben, die verschiedene Varianten (z. B. hinsichtlich Rabattsätze, Randbedingungen etc.) des gleichen Rabatt-Typs (z. B. additiver Rabatt) darstellen kann.

Die Rabatt-Volumen-Tabelle 4h ordnet diesen Rabattstaffelnummern als Ordnungszahl wiederum den für die Anwendung des Rabattes notwendigen Mindest-Umsatz-Betrag zu, den Zeitraum, innerhalb dessen dieser Umsatzbetrag erreicht werden muß, sowie die durch die Rabattierung erzielte Ermäßigung in absoluten Zahlen oder in Prozent.

Fig. 2d zeigt eine Teil-Speichereinheit der zweiten Speichereinheit 5, welche die verbrauchsrelevanten Daten enthält. Dabei ist ebenfalls in Form einer Tabelle, der Verbindungs-Daten-Tabelle 5a, jedes einzelne Telefongespräche bzw. jede einzelne Telekommunikations-Dienstleistung, gekennzeichnet durch eine sogenannte Gesprächsnummer als Ordnungszahl, beschrieben durch Datum, Startzeit und Dauer dieser TK-Dienstleistung. Der Rechner ermittelt aus dem Datum einerseits den Wochentag (Werktag/Samstag/Sonntag/Feiertag) und trägt dies in der Zeittabelle nach sowie den für das jeweilige Gespräch/Datenübermittlung benutzten Anbieter. Dessen Ermittlung wird ebenfalls vom Rechner zuvor durchgeführt, wobei die Vorgehensweise davon abhängt, welche Informationen die TK-Anlage 3 bzw. deren Meßeinheit 6 hierzu liefert:
- Sofern die an der TK-Anlage verfügbaren Amtsleitungen jeweils einem bestimmten Anbieter fest zugeordnet sind, genügt die Information, welche Amtsleitung benutzt wurde.
- Bei Benutzung der Call-by-Call-Methode, bei der ein wahlfreier Anbieter durch Benutzung einer bestimmten Vorwahlnummer vom Nutzer ausgewählt wird, erfolgt die Ermittlung des benutzten Anbieters über die benutzte Vorwahlnummer.
- Bei Voreinstellung der TK-Anlage auf einen oder mehrere vorher ausgewählte Anbieter (Preselection) muß diese Festlegung des Kunden vorher bekannt und dem Rechner eingegeben sein.
- Der letzte Fall besteht darin, daß die TK-Anlage lediglich ein Index-Signal liefert, aus dem nur mittelbar aber sicher, auf den benutzten Anbieter geschlossen werden kann.

Für die simulative Kontrolle der Telekommunikations-Abrechnung kann diese ZeitTabelle Gespräch für Gespräch mittels eines entsprechenden Programms in einzelne Roh-Abrechnungspreise - anhand des zu benutzenden Tarifes des Anbieters - umgerechnet werden, und anschließend unter Berücksichtigung der vorhandenen Rabattierung über eine Abrechnungsperiode der End-Abrechnungspreis ermittelt werden.

Natürlich können Datum sowie Start und Ende der einzelnen Tarife aus der Tariftabelle statt dessen auch in der Verbindungs-Daten-Tabelle mitgeführt werden.

Ebenso ist in der Verbindungs-Daten-Tabelle eine Gesprächsnummer als Ordnungszahl nicht zwingend notwendig, sondern dient lediglich der Erleichterung der Datenzuordnung bei den Rechenoperationen.

### BEZUGSZEICHENLISTE

- 1: Kunde
- 2a,b: Anbieter
- 3: TK-Anlage
- 4: erste Speichereinheit
- 4a,b: Teil-Speichereinheit
- 5: zweite Speichereinheit
- 6: Messeinheit
- 7: Rechner
- 8: Programm
- 9: Verbindungsvorrichtung
- 10: Vergleicher
- 11a,b: Eingabeeinheit
- 12a,b: Ausgabeeinheit
- 13: Zeit-Messstelle
- 14: Ziel-Messstelle
- 15: Anbieter-Messstelle
- 16: Datennetz
- 17: Controlling-Firma

## Patentansprüche

1. Simulationsvorrichtung zur simulativen Berechnung des Abrechnungspreises der von einem Kunden (1) bei wenigstens einem Anbieter (2a..) in Anspruch genommenen Telekommunikationsdienstleistungen (TK-D) mit
- einer Telekommunikations-Anlage (3) des Kunden (1),
- einer ersten Speichereinheit (4) zur Speicherung der tarifrelevanten Parameter,
- wenigstens einer Messeinheit (6) zur Erfassung der verbrauchsrelevanten Parameter,
- einer zweiten Speichereinheit (5) zum Zwischenspeichern der verbrauchsrelevanten Parameter,
- einem Rechner (7) mit einem Programm (8) zur Verknüpfung der tarifrelevanten Parameter mit den verbrauchsrelevanten Parametern,
- einer Verbindungsvorrichtung (9) zur Verbindung der Messeinheit (6) mit dem Rechner (7),
- wenigstens einer Eingabeeinheit (11) zur Eingabe der tarifrelevanten Parameter,
- wenigstens einer Ausgabeeinheit (12) zur Ausgabe der verbrauchsrelevanten Parameter und/oder des Ergebnisses der simulativen Berechnung.

2. Vorrichtung nach Anspruch 1,
**dadurch gekennzeichnet, dass**
die Messeinheit (6)
- eine Zeit-Messstelle (13) zur Erfassung von Zeitpunkt und Dauer der TK-D,
- eine Ziel-Messstelle (14) zur Erfassung der Ziel-Rufnummer der TK-D und
- eine Anbieter-Messstelle (15) zur Erfassung des Anbieters der TK-D umfasst, und insbesondere
- die erste Speichereinheit (4) die tarifrelevanten Parameter in Form mehrerer getrennter Teil-Speichereinheiten (4a,b..) (Tabellen) enthält und das Programm (8) Programmteile zur Verknüpfung dieser Tabellen aufweist und insbesondere
- die erste Speichereinheit (4) am Rechner (7) angeordnet ist und insbesondere
- die zweite Speichereinheit (5) am Rechner (7) angeordnet ist.

3. Vorrichtung nach einem der vorhergehenden Ansprüche,
**dadurch gekennzeichnet, dass**
die Vorrichtung einen Vergleicher (10) zum Vergleich des über die Eingabeeinheit (11) eingegebenen tatsächlichen Abrechnungspreises mit dem simulativ berechneten Abrechnungspreis aufweist.

4. Vorrichtung nach einem der vorhergehenden Ansprüche,
**dadurch gekennzeichnet, dass**
die Verbindungsvorrichtung (9) Teil eines bezüglich des Kunden (1) firmeninternen bzw. firmenexternen Datennetzes (16) ist.

5. Vorrichtung nach einem der vorhergehenden Ansprüche,
**dadurch gekennzeichnet, dass**
die zweite Speichereinheit (5) an der Telekommunikationsanlage (3) angeordnet ist.

6. Vorrichtung nach einem der vorhergehenden Ansprüche,
**dadurch gekennzeichnet, dass**
- wenigstens eine Eingabeeinheit (11b) und wenigstens eine Ausgabeeinheit (12b) beim Kunden (1) angeordnet sind und hierüber der Kunde jederzeit das momentane Ergebnis der simulativen Berechnungen abfragen kann und insbesondere
- der Rechner (7) sowie die erste Speichereinheit (4) bei einer Controlling-Firma (17) angeordnet sind.

7. Vorrichtung nach einem der vorhergehenden Ansprüche,
**dadurch gekennzeichnet, dass**
- die erste Speichereinheit (4) eine erste Teil-Speichereinheit (4a) in Form einer Ortsnetztabelle umfaßt, welche für die diversen Vorwahlnummern im Inland, ggf. im Ausland sowie für TK-Dienste und Sondernummern jeweils eine Ortsnetznummer als Ordnungsnummer zuordnet und insbesondere
- die erste Speichereinheit (4) eine Teil-Speichereinheit (4b) in Form einer Verzonungstabelle umfaßt, in der jeder möglichen Kombination von Quell-Ortsnetznummer und Ziel-Ortsnetznummer die entsprechende Zone sowie eine Verzonungsnummer als Ordnungszahl zugeordnet ist.

8. Vorrichtung nach einem der vorhergehenden Ansprüche,
**dadurch gekennzeichnet, dass**
- die erste Speichereinheit (4) eine Teil-Speichereinheit (4c) in Form einer Preistabelle für Sprach-TK-D umfaßt, in welcher für jede Tarifnummer wenigstens der Aufschlagpreis, die Aufschlagdauer, die Taktzeit und der Taktpreis, insbesondere auch die zu entrichtende Umsatzsteuer, eine Zonen-Wechselregel, und ggf. der Tarifname hinterlegt ist, und insbesondere
- die erste Speichereinheit (4) eine Teil-Speichereinheit (4c) in Form einer Preistabelle für Daten-TK-D umfaßt, in welcher für jede Tarifnummer wenigstens der Aufschlagpreis, die Aufschlagdauer, die Taktzeit und der Taktpreis, insbesondere auch die zu entrichtende Umsatzsteuer, eine Zonen-Wechselregel, und ggf. der Tarifname hinterlegt ist.

9. Vorrichtung nach einem der vorhergehenden Ansprüche,
**dadurch gekennzeichnet, dass**
- die erste Speichereinheit (4) eine Teil-Speichereinheit (4d) in Form einer Tariftabelle umfaßt, in welcher für jede Tarifnummer die zeitliche Gültigkeit, insbesondere hinsichtlich Wochentag und Uhrzeit, ggf. auch hinsichtlich von Feiertagen, hinterlegt ist und insbesondere
- die erste Speichereinheit (4) eine Teil-Speichereinheit (4e) in Form einer Rabatt-Modell-Tabelle umfaßt, in der für jeden Anbieter die jeweils vorhandenen Rabatt-Modell-Nummern angegeben sind.

10. Vorrichtung nach einem der vorhergehenden Ansprüche,
**dadurch gekennzeichnet, dass**
- die erste Speichereinheit (4) eine Teil-Speichereinheit (4f) in Form einer Rabatt-Tarif-Tabelle umfaßt, in der den einzelnen Rabatt-Tarif-Nummern als Ordnungszahl, der jeweils der zugrundeliegende Basistarif, eine Rabatt-Staffel-Nummer und ggf. eine Rückfallbedingung zugeordnet sind und insbesondere
- die erste Speichereinheit (4) eine Teil-Speichereinheit (4g) in Form einer Rabatt-Staffel-Tabelle umfaßt, in der jeder Rabatt-Staffel-Nummer als Ordnungszahl der entsprechende Rabatttypus, z. B. additiver Rabatt, Gesamtbetragsrabatt etc. zugeordnet ist.

11. Vorrichtung nach einem der vorhergehenden Ansprüche,
**dadurch gekennzeichnet, dass**
- die erste Speichereinheit (4) eine Teil-Speichereinheit (4h) in Form einer Rabatt-Volumen-Tabelle umfaßt, in der jeder Rabatt-Staffel-Nummer das Rabattvolumen, beispielsweise in Prozent, der hierfür notwendige Mindest-Umsatz-Betrag sowie der maximale Zeitraum, in dem dieser Umsatzbetrag erzielt werden muß, zugeordnet sind und insbesondere
- die erste Speichereinheit (4) eine Teil-Speichereinheit (4i) in Form einer Anbietertabelle umfaßt, in der für jeden Anbieter die vom Anbieter gebotenen Tarifnummern, die Verfügbarkeit in regionaler und zeitlicher Hinsicht sowie die Verfügbarkeit in der Praxis hinterlegt sind und insbesondere
- die Teil-Speichereinheit (4i') in Form einer Praxis-Anbieter-Tabelle umfaßt, die Teil der Anbieter-Tabelle ist und nur die in der Praxis auch verfügbaren Anbieter bzw. deren Tarife umfaßt.

12. Vorrichtung nach einem der vorhergehenden Ansprüche,
**dadurch gekennzeichnet, dass**
die zweite Speichereinheit (5) die verbrauchsrelevanten Daten in Form wenigstens einer Teil-Speichereinheit in Form einer Verbindungs-Daten-Tabelle umfaßt, in welcher jeder einzelnen geführten Telekommunikations-Dienstleistung in Form einer Gesprächsnummer als Ordnungszahl Dauer und Zeitpunkt, insbesondere Start-Zeitpunkt, insbesondere unterschieden nach Datum, Wochentag, Feiertag etc. zugeordnet ist.

13. Speichereinheit (4) zur Speicherung der tarifrelevanten Parameter zur Abrechnung von TK-D,
**dadurch gekennzeichnet, dass**
die Speichereinheit (4) mehrere Teil-Speichereinheiten (4a,b..) umfaßt.

14. Verfahren zur simulativen Berechnung des Abrechnungspreises der von einem Kunden (1) bei wenigstens einem Anbieter (2a..) in Anspruch genommenen Telekommunikations-Dienstleistungen (TK-D) durch Messung der verbrauchsrelevanten Paramater und Berücksichtigung der in einem Tarifvertrag zwischen Kunden und Anbieter vereinbarten tarifrelevanten Parameter, wobei an der Telekommunikations-Anlage (3) des Kunden (1) als verbrauchsrelevante Daten
- Zeitpunkt und Dauer
- die verantwortliche Nebenstelle der TK-Anlage,
- wenigstens das Ziel-Ortsnetz, insbesondere die Ziel-Rufnummer,
- wenigstens Indizien hinsichtlich des benutzten Anbieters (2a...) der in Anspruch genommenen TK-D ermittelt und durch Verknüpfung mit den tarifrelevanten Parametern der Abrechnungspreis ermittelt wird.

15. Verfahren nach Anspruch 14,
**dadurch gekennzeichnet, dass**
die TK-Anlage auch die für die TK-D benutzte Amtsleitung mit ermittelt.

16. Verfahren nach Anspruch 14 oder 15,
**dadurch gekennzeichnet, dass**
die Berechnung des Abrechnungspreises für ganze Abrechnungsperioden, insbesondere die für nachträgliche Rabattierungen relevanten Abrechnungsperioden, erfolgt.

17. Verfahren nach einem der vorhergehenden Verfahrensansprüche,
**dadurch gekennzeichnet, dass**
wenigstens die tarifrelevanten Parameter in Form einer Datenbank in dem Speicher einer EDV abgelegt werden, und insbesondere auch die vertragsrelevanten Daten, und die Verknüpfungen von beiden mittels eines in einer EDV gespeicherten Programmes durchgeführt wird.

18. Verfahren nach einem der vorhergehenden Verfahrensansprüche,
**dadurch gekennzeichnet, dass**
- zunächst ein Roh-Abrechnungspreis ohne Berücksichtigung von Rabattierungen ermittelt wird und anschließend, insbesondere über eine gesamte Abrechnungsperiode, beispielsweise einen Monat, die nachträgliche Rabattierung ermittelt und vom Roh-Abrechnungspreis zwecks Ermittlung des End-Abrechnungspreises abgezogen wird und insbesondere
- die Ermittlung des Roh-Abrechnungspreises zeitgleich bzw. zeitnah nach Beendigung der jeweiligen in Anspruch genommenen TK-D durchgeführt wird.

19. Verfahren nach einem der vorhergehenden Verfahrensansprüche,
**dadurch gekennzeichnet, dass**
- die verbrauchsrelevanten Daten von der Messeinheit (6) der Telekommunikations-Anlage (3) periodisch oder auf Abruf durch den zugeordneten Rechner (7) an diesen übermittelt werden und insbesondere
- der simulativ berechnete Abrechnungspreis mit dem tatsächlich in Rechnung gestellten Abrechnungspreis verglichen wird.

20. Verfahren nach einem der vorhergehenden Verfahrensansprüche,
**dadurch gekennzeichnet, dass**
- die tarifrelevanten Parameter in Form korrelierter Datenbanken, insbesondere Anbieterdatenbanken, Tarifdatenbanken und Rabattdatenbanken, gespeichert werden und insbesondere
- die Tarifdatenbank eine Teil-Datenbank (4a) in Form einer Ortsnetztabelle umfaßt, in der die Zuordnung der einzelnen Orte zu den einzelnen Ortsnetzen abgelegt ist.
